Europäisches Patentamt

European Patent Office

Office européen des brevets

(11) Veröffentlichungsnummer : **0 072 031**
**B1**

(12) **EUROPÄISCHE PATENTSCHRIFT**

(45) Veröffentlichungstag der Patentschrift :
15.05.85

(21) Anmeldenummer : **82107258.4**

(22) Anmeldetag : **10.08.82**

(51) Int. Cl.⁴ : **F 16 B 13/02**

(54) **Kunststoffdübel für Leichtbaustoffe.**

(30) Priorität : **11.08.81 DE 3131758**

(43) Veröffentlichungstag der Anmeldung :
**16.02.83 Patentblatt 83/07**

(45) Bekanntmachung des Hinweises auf die Patenterteilung : **15.05.85 Patentblatt 85/20**

(84) Benannte Vertragsstaaten :
**AT BE CH DE FR GB IT LI LU NL SE**

(56) Entgegenhaltungen :
**CH-A-    46 286
CH-A-    426 382
DE-B- 2 143 005
DE-B- 2 705 975
DE-C-    908 531
DE-U- 1 751 804
US-A- 1 599 784
US-A- 1 751 818
US-A- 1 972 715**

(73) Patentinhaber : **M. Meisinger KG**
**D-8890 Aichach (DE)**

(72) Erfinder : **Berger, Xaver**
**Theodor-Heuss Strasse 38**
**D-8890 Aichach (DE)**

(74) Vertreter : **Grupe, Peter, Dipl.-Ing. et al**
**Patentanwaltsbüro Tied-**
**tke-Bühling-Kinne-Grupe-Pellmann-Grams-Struif**
**Bavariaring 4**
**D-8000 München 2 (DE)**

**Beschreibung**

Die Erfindung bezieht sich auf einen Kunststoffdübel gemäß dem Oberbegriff des Patentanspruchs 1.

Es sind Kunststoffdübel bekannt, die schraubenförmig an der Außenfläche des Dübels verlaufende Längsrippen relativ großer radialer Erstreckung besitzen und deren Spreizkörper über die gesamte Länge durch einen verschraubten Diametralschlitz in zwei Spreizhälften gespalten ist. Der Dübel wird bei der Montage mittels eines Hammers in den porösen Werkstoff geschlagen, wobei er sich durch die schneidenförmigen Rippen in die Wand schraubt. Die Außenprofilierung stellt der Eintreibkraft einen großen Widerstand entgegen und das den Rippenflanken benachbarte Material wird in Dübel-Eindrehrichtung beim Einschlagen bereits auf Scheren belastet. Durch die große Induktilität des Leichtbaustoffs ist dadurch die Gefahr gegeben, daß das Material zwischen den Rippen ausbricht und die bei Eindrehen der Schraube erfolgende Aufspreizung des Dübels zu einer vollkommenen Zerstörung des den Dübel umgebenden Leichtbaustoffs führt, so daß der Dübel keinen ausreichenden Ausziehwiderstand der Schraube mehr gewährleisten kann. Dieser Effekt kann sich dadurch verstärken, daß der Spreizkörper beim Aufspreizen im wesentlichen einen Liniendruck auf die Lochwandung im Mauerwerk ausübt und die somit induzierten Kontaktspannungen den Werkstoff des Mauerwerks überlasten.

Aus DE-C-908 531 ist auch ein Kunststoffdübel mit gerade verlaufenden Längsrippen und Längsschlitzen bekannt.

Der Erfindung liegt die Aufgabe zugrunde, einen Dübel gemäß dem Oberbegriff des Patentanspruchs 1 so weiterzubilden, daß beim Einsetzen des Dübels sichergestellt wird, daß das Mauerwerk oder dgl. nicht beschädigt wird und daß beim Aufspreizen des Dübels dafür Sorge getragen ist, daß bei ausreichender Verzahnung keine örtliche Überbelastung des tragenden Mauerwerks auftritt.

Diese Aufgabe wird durch die im kennzeichnenden Teil des Patentanspruchs 1 angegebenen Merkmale gelöst.

Durch die Aufspaltung des Spreizkörpers durch Schlitze, die durch die Längsrippen gehen, wird der Spreizkörper nachgiebig und elastisch. Die Querrippen stabilisieren die so entstehenden Längs- bzw. Spreizsegmente, sie üben bei der Montage des Dübels eine sanfte und mit zunehmender Eintreibstrecke gesteigerte Räumfunktion aus und bringen die Dübelhöhlung auf den Arbeitsquerschnitt. Der Räumvorgang hat den Vorteil, daß nach der Montage die gesamte Querrippe am Mauerwerk anliegt und damit keine Linienbelastung des Mauerwerks mehr auftritt. Die Form der Querrippen und des Dübelhalses sorgen dabei für eine wirksame und den Leichtbaustoff schonende Verzahnung, so daß eine stabile Drehsicherung gewährleistet wird. Die zum Dübelhals hin zunehmende Stabilität des Dübels sorgt dafür, daß sich der Räumeffekt nicht negativ auf den Leichtbaustoff auswirkt, weil das Bohrloch allmählich freigeräumt wird. Beim Eindrehen der Schraube ist durch die Außenkontur der Querrippen und des Dübelhalses für eine ausreichende Verdrehsicherung gesorgt und die Aufweitung des Spreizkörpers führt zu einer Stufenweisen Kraftübertragung der Spreizkraft auf das Mauerwerk. Die Querrippen drücken sich durch die erfindungsgemäße Ausgestaltung unter flächiger Anlage ihrer Außenkontur schneidenartig zuerst in das Mauerwerk und stabilisieren so den Dübel. Erst später, wenn die Querrippen voll in das Mauerwerk eingedrungen sind, kann der Spreizkörper mit seinen Außenflächen zur Anlage an der Mauerwerkbohrung kommen. Die Aufweitung des Spreizkörpers führt jedoch, nachdem die Querrippen in das Material eingedrungen sind, zunächst zu einer Verkeilung der Längsrippen und im Anschluß daran zu einer zusätzlichen Vorspannung des Dübels in Längsrichtung, so daß eine Linienbelastung des Mauerwerks weitestgehend vermieden ist. Besonders vorteilhaft ist die Weiterbildung gemäß Unteranspruch 2, da auf diese Weise die Räumfunktion, insbesondere im Bereich der Rippen-Randbereiche verstärkt wird.

Der Dübelhals kann gemäß einer vorteilhaften Weiterbildung der Erfindung mit einer mit der Verlängerung der Längsschlitze zusammenfallenden Aussparung versehen sein, um so die Nachgiebigkeit des Dübelhalses zu erhöhen und das Mauerwerk bzw. den Leichtbaustoff weitgehend zu schonen, wenn der von der Mauerwerksbohrung abweichende Querschnitt des Dübelhalses in die Mauer eindringt.

Die Ausgestaltung des Dübelhalses gemäß Unteranspruch 5 hat den Vorteil, daß die Aufspreizwirkung des Dübels im empfindlichsten Abschnitt des Mauerwerks vermieden wird.

Der sich zum Ende des Dübels hin verstärkende Dübelhals gemäß Unteranspruch 10 sorgt für einen festen Sitz des Dübels, auch wenn durch die Querrippen bereits aufgrund extremer Weichheit des Mauerwerks ein größtmöglicher Querschnitt freigeräumt wurde.

Ein den Dübelhals radial überragender Anschlagflansch hat den besonderen Vorteil, daß der Dübel beim Einschlagen nicht zu weit in das vorgebohrte Mauerwerk-Loch eindringt.

Wenn drei im gleichen Abstand zueinander verlaufende Schlitze vorgesehen sind, kann die Spreizkraft der Schraube gleichmäßig auf das Mauerwerk übertragen werden, ohne daß die Form des Dübels zu aufwendig und zu kompliziert wird.

Die Ausgestaltung des vordersten Bereichs des Dübels mit einem zylindrischen Zentrierabschnitt, dessen Durchmesser an die Mauerwerks-Bohrung angeglichen ist, sorgt für eine gute Zentrierung des Dübels bei der Montage.

Weitere vorteilhafte Ausgestaltungen ergeben sich aus den übrigen Unteransprüchen.

Nachstehend wird anhand schematischer Zeichnungen ein Ausführungsbeispiel der Erfindung näher erläutert. Es zeigen :

Figur 1  einen Längsschnitt durch einen Kunststoffdübel,

Figur 2  ein Ansicht des Kunststoffdübels gemäß Fig. 1 mit Blickrichtung des Pfeils II,

Figur 3  eine Ansicht des Kunststoffdübels gemäß Fig. 1 mit Blickrichtung des Pfeils III,

Figur 4  einen Schnitt durch den Kunststoffdübel gemäß Fig. 1 entlang der Linie IV-IV, und

Figur 5  einen Schnitt durch den Kunststoffdübel gemäß Fig. 1 entlang der Linie V-V.

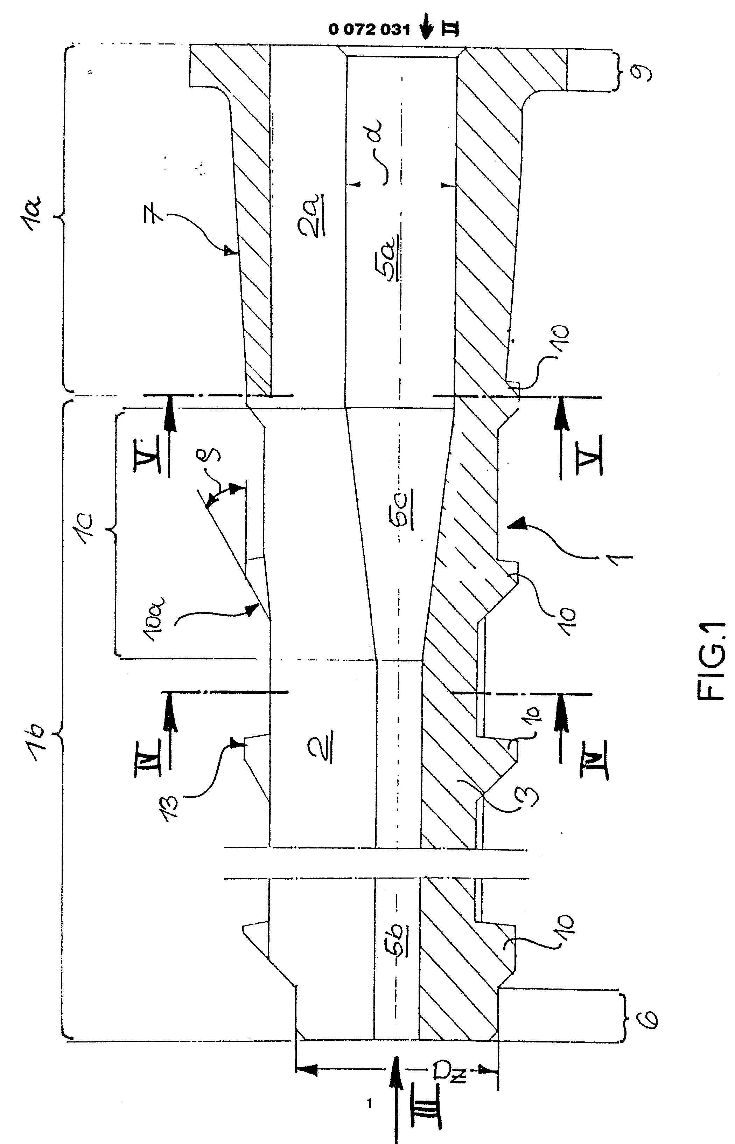

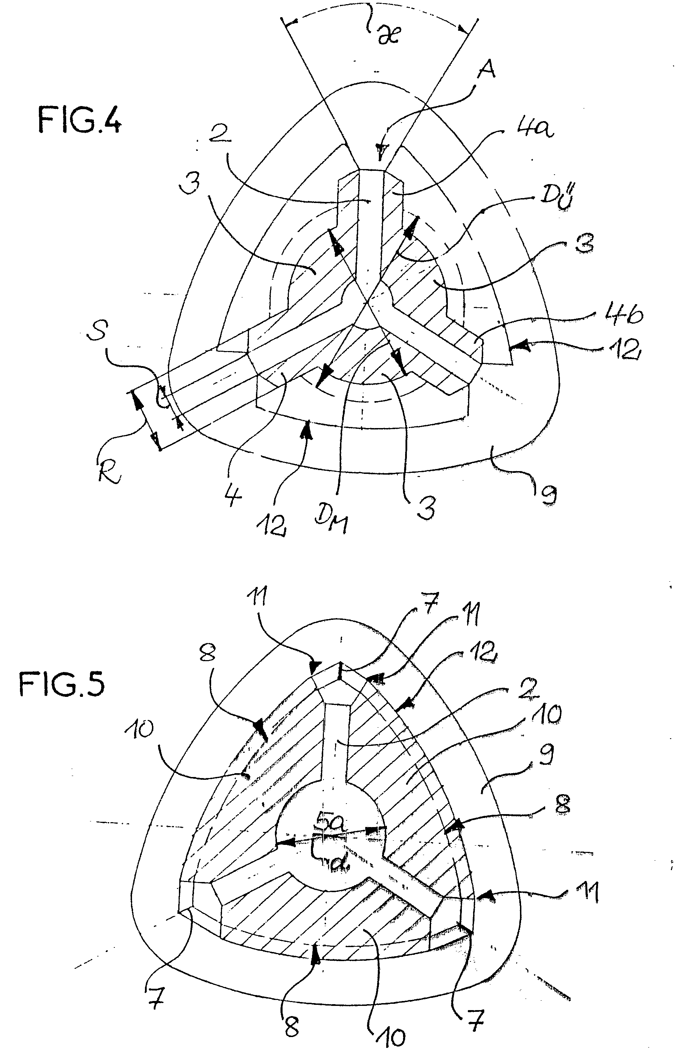

Die Fig. 1 bis 5 zeigen einen Dübel 1 aus Kunststoff oder dgl. mit einem Hals 1a und einem Spreizkörper 1b. Der Dübel besitzt drei in gleichmäßigem Abstand stehende radiale Längsschlitze 2, die den Spreizkörper 1b in drei Längs- bzw. Spreizsegmente 3 unterteilen. Der Spreizkörper 1b weist radial nach außen stehende Längsrippen 4 auf, die durch je einen Längsschlitz 2 in je zwei Längsrippenhälften 4a bzw. 4b unterteilt werden, deren radial außen liegende Flächen abgeschrägt sind (Fig. 4). Die Weite S des Längsschlitzes 2 entspricht im wesentlichen einem Drittel der Breite R der Längsrippe 4 (Fig. 4). Der Dübel 1 besitzt eine Dübelhöhlung 5, die im gezeigten Ausführungsbeispiel kreisrund und im Durchmesser abgestuft ist. Im Bereich des Halses 1a weist die Dübelhöhlung einen Abschnitt 5a auf, dessen Durchmesser d dem Schaftdurchmesser der einzuschraubenden Schraube angepaßt ist. Im vorderen Abschnitt des Dübels bildet die Dübelhöhlung einen Bereich 5b aus, dessen Durchmesser in der Größenordnung der doppelten Schlitzweite S liegt. Zwischen diesen Bereichen liegt ein Übergangsbereich 1c des Dübels 1, in dem eine konisch verlaufende Dübelhöhlung 5c ausgebildet ist.

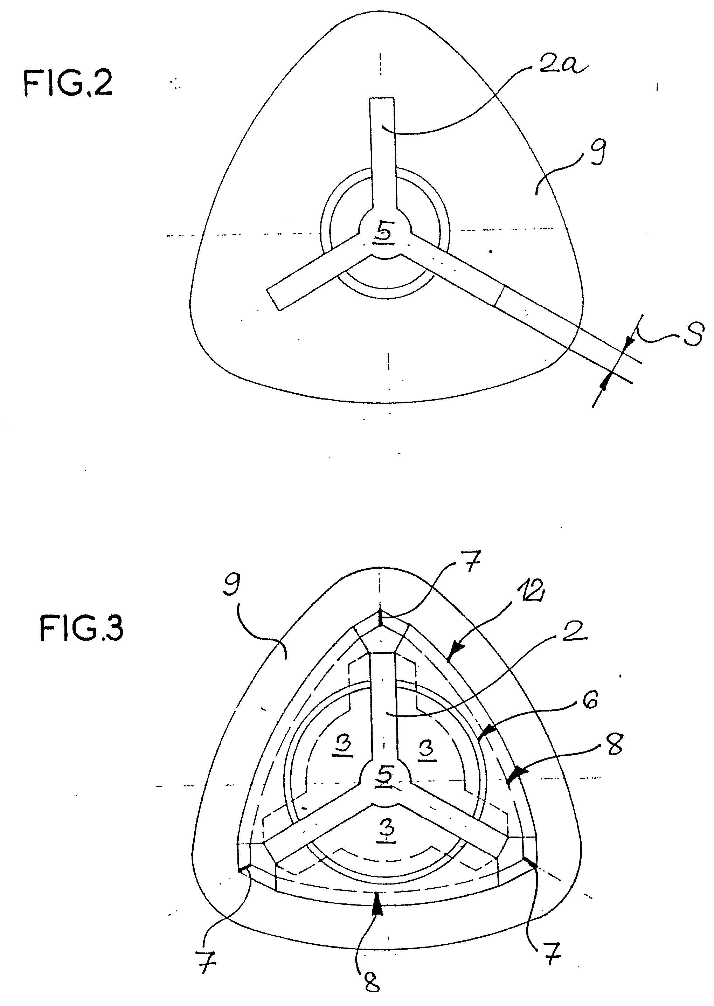

Der Spreizkörper 1b hat eine im wesentlichen zylindrische Außenkontur. An der Spitze des Dübels ist ein Zentrierabschnitt 6 ausgebildet, dessen Außendurchmesser $D_Z$ im wesentlichen der Dübelbohrung im Mauerwerk entspricht. Im Übergangsbereich 1c weist der Spreizkörper etwa den gleichen Durchmesser $D_ü$ auf, zwischen diesen Abschnitten 1c und 6 ist der Außendurchmesser $D_M$ des Dübels 1 jedoch um ca. 20 % reduziert. Die Längsrippen 4 stehen vom Spreizkörper um ca. 40 bis 60 % in radialer Richtung vor, haben konstante radiale Erstreckung und gehen im Bereich des Halses 1a in Längskanten 7 über, welche Schnittgeraden ballig nach außen gewölbter Halssegmentflächen 8 darstellen. Im gezeigten Ausführungsbeispiel besitzt der Halsabschnitt im Querschnitt gesehen (Fig. 3 und Fig. 5) die Form eines Dreiecks mit balligen Seiten, deren Krümmung konstant sein kann und größer ist als der Umkreis um dieses Dreieck. Der Hals 1a ist darüber hinaus auf seiner Außenseite konisch ausgebildet, so daß die Steifigkeit zum Dübelkopf hin zunimmt. Der Hals 1a geht im Bereich des Dübelkopfs in einen Anschlagflansch 9 über, der zur axialen Positionierung des Dübels 1 dient. Dieser Anschlaglansch kann rund oder der Kontur des Halses folgend und an den Kanten abgerundet sein. In der gezeigten Ausführungsform geht der Längsschlitz 2 im Bereich des Dübelhalses 1a in eine schlitzförmige Aussparung 2a über, die zur leichteren Entformbarkeit beim Spritzgießen leicht konisch ausgebildet sein kann.

Im Bereich des Spreizkörpers 1b, d. h. hinter dem Zentrierabschnitt 6 und vor dem Hals 1a sind auf jedem Längssegment 3 mehrere in axialem Abstand zueinander stehende und senkrecht zur Dübelachse verlaufende Querrippen 10 so angeformt, daß sie die jeweiligen Längsrippenhälften 4a und 4b untereinander verbinden. Die Querrippen 10 erstrecken sich im Bereich des Anformungsabschnitts A an die Längsrippen 4 über diese in radialer Richtung hinaus, wordurch der Längsschlitz 2 in diesem Bereich keilförmig mit einem bevorzugten Keilwinkel κ von 60° erweitert wird. In axialer Richtung des Dübels betrachtet folgt die Außenkontur 12 der Querrippen 10 im wesentlichen der Kontur des Dübelhalses 1a, die Querrippen 10 bilden jedoch am Punkt ihrer größten radialen Erstreckung eine scharfe Rippenkante 11 aus. Der Querschnitt der Querrippen 10 ist so gestaltet, daß zur Dübelspitze hin eine Fläche 10a gebildet wird, die unter einem Neigungswinkel δ, der bevorzugterweise bei 45° liegen kann, zur Dübelachse hin geneigt ist. Zum Hals des Dübels fällt die Querrippe 10 steil ab und im Bereich ihrer Außenkontur 12 besitzt sie eine Abflachung 13.

In der gezeigten Ausführungsform haben alle Querrippen 10 die gleiche radiale Erstreckung, sie können jedoch durchaus auch zueinander radial abgestuft ausgebildet sein. Ferner sind in der gezeigten Ausführungsform die Längsrippen 4 mit unveränderter radialer Erstreckung und gleicher Breite R gezeigt. Es kann jedoch auch vorgesehen sein, daß sich die Längsrippen 4 zur Spitze hin sowohl in radialer als auch in Umfangsrichtung verjüngen. Darüber hinaus ist die Dübelhöllung nicht auf eine kreisrunde Form beschränkt. Sie kann auch prismatisch ausgebildet sein.

Zur Montage des Dübels wird dieser mittels eines Hammers in ein zylindrisch vorgebohrtes Bohrloch des Mauerwerks getrieben. Dabei räumen die Querrippen 10 unter Aneinanderdrücken der Längssegmente 3 mit ihren Rippenkanten 11 und ihren Außenflächen 12 mit zunehmender Kraft eine Fläche frei, die konzentrisch zu den Hals-segmentflächen 8 verläuft. Die Rippenkanten 11 und die Außenkontur 12 der Querrippen 10 sowie des Halses 1a formen die Mauerwerkbohrung so um, daß der Dübel nicht mehr verdreht werden kann und dieser mit den Außenseiten der Querrippen flächig an dem neu entstehenden Mauerwerkloch anliegt. Beim Eindrehen einer Befestigungsschraube schneiden sich die Querrippen 10 in das Mauerwerk, wobei die vorderen Querrippen für die wirksamste Verzahnung sorgen. Im Anschluß daran spreizen sich die Längsrippen bei weiterem Eindrehen der Befestigungschraube in die von der Rippenkante freigeräumte Höhlung, und erst wenn der Dübel ausreichend mit dem Mauerwerk verzahnt ist, kommt der Spreizkörper selbst zum tragen. Die Belastung des Mauerwerks erfolgt somit exakt abgestuft und gleichmäßig verteilt, so daß schlagartige Überbeanspruchungen des Leichtbaustoffs ausgeschlossen werden können.

Es wird ein Kunststoffdübel zur Verankerung von Schrauben in Gips, Gasbeton oder dergl. Leichtbaustoffen beschrieben, der einen ringförmig geschlossenen Hals und einen durch radiale Längsschlitze in Spreizsegmente unterteilten zylindrischen Spreizkörper besitzt, der radial vorstehende Längsrippen trägt. Durch die Längsrippen, die am Hals in jeweils eine Längskante übergehen, welche eine Schnittgerade von gleichförmig nach außen gewölbten Oberflächensegmenten des Halses darstellt, verlaufen mittig und in axialer Richtung mindestens zwei Längsschlitze. An die Spreizsegmente sind mehrere, in axialem Abstand stehende und die Längsrippen versteifende Querrippen angeformt, deren Außenkontur im Querschnitt des Dübels betrachtet parallel zu den jeweiligen Oberflächensegmenten des Halses verläuft. Der Querschnitt der Oberflächensegmente verjüngt sich zur Dübelspitze hin keilförmig und diese Oberflächensegmente sind im Bereich des Übergangs von Quer- und Längsrippe so ausgebildet, daß sie die Längsrippen unter keilförmiger Erweiterung des Längsschlitzes radial überragen und im Punkt ihrer größten radialen Erstreckung eine scharfe Rippenkante ausbilden. Mit dieser Ausgestaltung des Dübels wird sichergestellt, daß das Mauerwerk bzw. der Leichtbaustoff beim Einsetzen des Dübels nicht beschädigt wird und daß beim Aufspreizen des Dübels dafür Sorge getragen ist, daß bei ausreichender Verzahnung keinerlei örtliche Überbelastung des tragenden Mauerwerks auftritt.

**Patentansprüche**

1. Kunststoffdübel (1) zur Verankerung von Schrauben in Gips, Gasbeton oder dgl. Leichtbaustoffen, mit einem ringförmig geschlossenen Hals (1a) und einem durch radiale Längsschlitze (2) in Spreizsegmente (3) unterteilten, im wesentlichen zylindrischen Spreizkörper (1b), der radial vorstehende Längsrippen (4) trägt wobei mindestens zwei Längsschlitze (2) mittig und in axialer Richtung durch Längsrippen (4) verlaufen, dadurch gekennzeichnet, daß sich die einen Längsschlitz (2) enthaltenden Längsrippen (4) bis in den vorderen Bereich des Spreizkörpers (1b) erstrecken, daß die Längsrippen (4) am Hals (1a) in jeweils eine Längskante (7) übergehen, welche eine Schnittgerade von gleichförmig nach außen gewölbten Oberflächensegmenten (8) des Halses (1a) darstellt, und daß an die Spreizsegmente (3) mehrere in axialem Abstand stehende und die Längsrippen (4) versteifende Querrippen (10) angeformt sind, deren Außenkontur (12) im Querschnitt des Dübels betrachtet parallel zu den jeweiligen Oberflächensegmenten (8) des Halses (1a) verläuft und deren Querschnitt sich zur Dübelspitze hin keilförmig verjüngt.

2. Kunststoffdübel nach Anspruch 1, dadurch gekennzeichnet, daß die Querrippen (10) im Bereich (A) ihres Übergangs in die Längsrippen (4) so ausgebildet sind, daß sie die Längsrippen (4) unter keilförmiger Erweiterung des Längsrippen (4) unter keilförmiger Erweiterung des Längsschlitzes (2) radial überragen und im Punkt ihrer größten radialen Erstreckung eine scharfe Rippenkante (11) ausbilden.

3. Kunststoffdübel nach Anspruch 1 oder 2, dadurch gekennzeichnet, daß die Längsschlitze in eine Aussparung (2a) des Dübelhalses (1a) übergehen.

4. Kunststoffdübel nach Anspruch 1 bis 3, dadurch gekennzeichnet, daß die Dübelhöhlung (5) kreisrund und im Durchmesser abgestuft ist.

5. Kunststoffdübel nach Anspruch 4, dadurch gekennzeichnet, daß die Dübelhöhlung (5) im Hals (1a) und im geschlitzten vorderen Abschnitt des Spreizkörpers (1b) zylindrisch und im Übergangsbereich (1c) der oben genannten Abschnitte konisch ausgebildet ist, und daß sie im Bereich des Halses (1a) einen Durchmesser (d) besitzt, der größer als der Schaftdurchmesser der zum Dübel gehörigen Schraube ist.

6. Kunststoffdübel nach Anspruch 1 bis 5, dadurch gekennzeichnet, dadurch gekennzeichnet, daß der Längsschlitz (2) eine Weite (S) besitzt, die im wesentlichen einem Drittel der Breite (R) einer Längsrippe (4) entspricht.

7. Kunststoffdübel nach Anspruch 1 bis 6, dadurch gekennzeichnet, daß die Längsrippenhälften (4a, 4b) unter gegenseitiger Annäherung der Spreizsegmente (3) gegeneinander drückbar sind.

8. Kunststoffdübel nach Anspruch 1 bis 7, dadurch gekennzeichnet, daß die Dübelhöhlung (5) bei vorgespannten Spreizsegmenten (3) auf ihren Arbeitsquerschnitt reduziert ist, der auf die Geometrie der einzudrehenden Schraube abgestimmt ist.

9. Kunststoffdübel nach Anspruch 1 bis 8, dadurch gekennzeichnet, daß der Dübehals (1a) in einen radial weiter ausgreifenden Anschlagflansch (9) übergeht.

10. Kunststoffdübel nach Anspruch 1 bis 9, dadurch gekennzeichnet, daß der Spreizkörper (1b) im Übergangsbereich (1c) einen größeren Außendurchmesser ($D_ü$) besitzt als im vorderen Bereich und daß der Dübelhals (1a) einen sich zum Anschlagflansch hin verstärkenden Aufbau besitzt.

11. Kunststoffdübel nach Anspruch 1 bis 10, dadurch gekennzeichnet, daß drei in gleichem Abstand zueinander verlaufende Längsrippen (4) vorgesehen sind.

12. Kunststoffdübel nach Anspruch 1 bis 11, dadurch gekennzeichnet, daß die Dübelhöhlung (5) im Bereich des Dübelhalses (1a) auf 80 % und im Bereich des vorderen Spreizkörpers (1b) auf

50 % der ursprünglichen Weite zusammendrückbar ist.

13. Kunststoffdübel nach Anspruch 1 bis 12, dadurch gekennzeichnet, daß der Spreizkörper (1b) einen Außendurchmesser ($D_Z$, $D_ü$) besitzt, der im entspannten Zustand im wesentlichen dem Lochdurchmesser der Mauerwerk-Bohrung entspricht.

14. Kunststoffdübel nach Anspruch 1 bis 13, dadurch gekennzeichnet, daß die Längsrippen (4) den Spreizkörper (1b) in radialer Richtung um 40 bis 60 % und die Querrippen (10) die Längsrippen (4) um bis zu 20 % überragen, wobei sie sich mit zunehmendem Abstand von der scharfen Rippenkante (11) an die radiale Erstreckung der Längsrippen (4) annähern.

15. Kunststoffdübel nach Anspruch 1 bis 14, dadurch gekennzeichnet, daß der Keilwinkel (κ) des Längsschlitzes (2) 60° und der Neugungswinkel (ρ) der nach vorne abfallenden Querrippenfläche (10a) 45° beträgt.

16. Kunststoffdübel nach Anspruch 1 bis 15, dadurch gekennzeichnet, daß der Spreizkörper (1b) im vorderen Zentrierabschnitt (6) vor der vordersten Querrippe (10) einen Außendurchmesser ($D_Z$) besitzt, der dem Bohrlochdurchmesser des Mauerwerks entspricht, und daß der Hals (1a) eine Weite besitzt, die um 40 % größer ist als der oben genannte Durchmesser des Mauerwerk-Bohrlochs.

17. Kunststoffdübel nach Anspruch 1 bis 11, dadurch gekennzeichnet, daß die Spreizsegmente (3) jeweils eine Außenfläche besitzen, von der die Querrippen (10) um ein im wesentlichen konstantes Maß vorstehen.

**Claims**

1. A plastic dowel (1) for anchoring screws in gypsum, aerated concrete or similar lightweight material, comprising an annularly closed neck (1a) and a substantially cylindrical spreader (1b) being divided into spreading segments (3) by radial longitudinal slots (2), the spreader carrying radially projecting longitudinal ribs (4), at least two longitudinal slots (2) extending centrally and in axial direction through longitudinal ribs (4), characterized in that the longitudinal ribs (4) containing a longitudinal slot (2) extend into the front portion of the spreader (1b), in that the longitudinal ribs (4) pass on the neck (1a) into one longitudinal edge (7) each which represents an intersection line of surface segments (8) of the neck (1a) that are directed uniformly in outward direction, and in that several axially spaced transverse ribs (10) bracing the longitudinal ribs (4) are formed on the spreading segments (3), the outer contour (12) of the transverse ribs (10) extending in parallel with the respective surface segments (8) of the neck (1a) when being regarded in the cross section of the dowel and tapering with its cross section toward the tip of the dowel in wedge-shaped manner.

2. A plastic dowel according to claim 1, characterized in that the transverse ribs (10) are formed in the region (A) of their transition into the longitudinal ribs (4) in such a way that they project radially over the longitudinal ribs (4) while widening the longitudinal slot (2) in wedge-shaped manner and form a sharp rib edge (11) in the point of their greatest radial extension.

3. A plastic dowel according to claim 1 or 2, characterized in that the longitudinal slots pass into a recess (2a) of the neck (1a) of the dowel.

4. A plastic dowel according to claim 1 to 3, characterized in that the cavity (5) of the dowel is circular and has a stepped diameter.

5. A plastic dowel according to claim 4, characterized in that the cavity (5) of the dowel is cylindrical in the neck (1a) and in the slotted front portion of the spreader (1b) and conical in the portion (1c) of transition of the above-mentioned portions, and in that the diameter (d) of the cavity in the region of the neck (1a) is greater than the diameter of the shaft of the screw corresponding to the dowel.

6. A plastic dowel according to claim 1 to 5, characterized in that the longitudinal slot (2) has a width (S) that corresponds substantially to a third of the breadth (R) of a longitudinal rib (4).

7. A plastic dowel according to claim 1 to 6, characterized in that the longitudinal rib halves (4a, 4b) are adapted to be pressed against each other while approaching mutually the spreading segments (3).

8. A plastic dowel according to claim 1 to 7, characterized in that with biased spreading segments (3) the cavity (5) of the dowel is reduced to its working cross section that is adjusted to the geometry of the screw to be tapped.

9. A plastic dowel according to claim 1 to 8, characterized in that the neck (1a) of the dowel passes into a further-reaching stop flange (9).

10. A plastic dowel according to claim 1 to 9, characterized in that the spreader (1b) has a greater external diameter ($D_ü$) in the transition portion (1c) than in the front portion and in that the neck (1a) of the dowel has a reinforcing structure toward the stop flange.

11. A plastic dowel according to claim 1 to 10, characterized in that three longitudinal ribs (4) are provided that extend at the same distance from each other.

12. A plastic dowel according to claim 1 to 11, characterized in that the cavity (5) of the dowel is adapted to be compressed to 80 % of its original width in the region of the neck (1a) of the dowel and to 50 % of its original width in the region of the front spreader (1b).

13. A plastic dowel according to claim 1 to 12, characterized in that the spreader (1b) has an external diameter ($D_Z$, $D_ü$) which corresponds in the released condition substantially to the diameter of the hole of the bore in the brickwork.

14. A plastic dowel according to claim 1 to 13, characterized in that the longitudinal ribs (4) radially project over the spreader (1b) by 40 to 60 % and in that the transverse ribs (10) project over the longitudinal ribs (4) by up to 20 %, the transverse ribs approaching the radial extension of the longitudinal ribs (4) with an increasing distance from the sharp rib edge (11).

15. A plastic dowel according to claim 1 to 14, characterized in that the wedge angle (κ) of the longitudinal slot (2) is 60° and the angle of inclination (ρ) of the transverse rib surface (10a) that is falling off in forward direction is 45°.

16. A plastic dowel according to claim 1 to 15, characterized in that the spreader (1b) has in the front centering portion (6) in front of the front-most transverse rib (10) an external diameter ($D_Z$) that corresponds to the diameter of the bore hole of the brickwork, and in that the neck (1a) has a width that is greater by 40 % than the above-mentioned diameter of the bore hole of the brickwork.

17. A plastic dowel according to claim 1 to 11, characterized in that the spreading segments (3) have each an outer face from which the transverse ribs (10) project by a substantially constant value.

**Revendications**

1. Cheville (1) en matière plastique pour l'ancrage de vis dans le plâtre, le béton-gaz et les matériaux de construction légers semblables, comportant un col (1a) fermé annulairement et un corps expansible (1b) de manière générale cylindrique divisé par des fentes longitudinales radiales (2) en segments écartables (3) et portant des nervures longitudinales (4) saillant radialement, au moins deux fentes longitudinales (2) traversant des nervures longitudinales (4) de façon médiane et dans la direction axiale, caractérisée par le fait que les nervures longitudinales (4) contenant une fente longitudinale (2) s'étendent jusque dans la partie antérieure du corps expansible (1b), par le fait qu'au col (1a) les nervures longitudinales (4) se transforment chacun en une arête longitudinale (7) qui constitue une droite d'intersection de segments de surface (8) du col (1a) bombés uniformément vers l'extérieur, et par le fait que sur les segments écartables (3) sont formées plusieurs nervures transversales (10) espacées axialement qui renforcent les nervures longitudinales (4) et dont le contour extérieur (12) vu en coupe transversale de la cheville s'étend parallèlement aux segments de surface (8) du col (1a) et la section diminue en coin vers la pointe de la cheville.

2. Cheville en matière plastique selon la revendication 1, caractérisée par le fait que les nervures transversales (10), dans la zone (A) de leur jonction aux nervures longitudinales (4), sont réalisées de façon à dépasser radialement ces nervures longitudinales (4) avec élargissement en forme de coin de la fente longitudinale (2) et à former une arête vive (11) au point où leur étendue radiale est la plus grande.

3. Cheville en matière plastique selon l'une des revendications 1 ou 2, caractérisée par le fait que les fentes longitudinales se tranforment en une échancrure (2a) du col (1a) de la cheville.

4. Cheville en matière plastique selon l'une des revendications 1 à 3, caractérisée par le fait que son trou intérieur (5) est de section circulaire et de diamètre étagé.

5. Cheville en matière plastique selon la revendication 4, caractérisée par le fait que son trou (5) est cylindrique dans le col (1a) et dans la partie antérieure fendue du corps expansible (1b) et conique dans la zone de raccordement (1c) des parties précitées, et présente dans la zone du col (1a) un diamètre (d) supérieur au diamètre de la tige de la vis correspondant à la cheville.

6. Cheville en matière plastique selon l'une des revendications 1 à 5, caractérisée par le fait que la fente longitudinale (2) a une largeur (S) correspondant au tiers environ de la largeur (R) d'une nervure longitudinale (4).

7. Cheville en matière plastique selon l'une des revendications 1 à 6, caractérisée par le fait que les demi-nervures longitudinales (4a, 4b) peuvent être serrées l'une contre l'autre avec rapprochement des segments écartables (3).

8. Cheville en matière plastique selon l'une des revendications 1 à 7, caractérisée par le fait que son trou intérieur (5), lorsque les segments écartables (3) sont précontraints, est réduit à sa section de travail, laquelle est accordée à la forme de la vis à visser.

9. Cheville en matière plastique selon l'une des revendications 1 à 8, caractérisée par le fait que son col (1a) se transforme en un collet de butée (9) qui dépasse radialement.

10. Cheville en matière plastique selon l'une des revendications 1 à 9, caractérisée par le fait que le corps expansible (1b) a dans la zone de raccordement (1c) un diamètre extérieur ($D_U$) plus grand que dans la partie antérieure, et que le col (1a) de la cheville se renforce vers le collet de butée.

11. Cheville en matière plastique selon l'une des revendications 1 à 10, caractérisée par le fait qu'elle comprend trois nervures longitudinales (4) équidistantes.

12. Cheville en matière plastique selon l'une des revendications 1 à 11, caractérisée par le fait que son trou intérieur (5) peut être réduit, dans la zone du col (1a), à 80 % de son ouverture initiale, et, dans la zone du corps expansible antérieure (1b) à 50 % de son ouverture initiale.

13. Cheville en matière plastique selon l'une des revendications 1 à 12, caractérisée par le fait que le corps expansible (1b) a un diamètre exté-rieur ($D_Z$, $D_U$) qui, à l'état détendu, correspond sensiblement au diamètre du trou pratiqué dans la maçonnerie.

14. Cheville en matière plastique selon l'une des revendications 1 à 13, caractérisée par le fait que les nervures longitudinales (4) dépassent le corps expansible (1b) de 40 à 60 % dans la direction radiale et les nervures transversales (10) dépassent les nervures longitudinales (4) jusqu'à 20 %, en se rapprochant de l'étendue radiale de celles-ci quand la distance de l'arête vive (11) augmente.

15. Cheville en matière plastique selon l'une des revendications 1 à 14, caractérisée par le fait que l'angle de coin (x) de la fente longitudinale (2) est de 60° et l'angle d'inclinaison (ρ) de la surface (10a) des nervures transversales qui descend vers l'avant est de 45°.

16. Cheville en matière plastique selon l'une des revendications 1 à 15, caractérisée par le corps expansible (1b) a, dans la partie antérieure de centrage (6) située en avant de la nervure transversale (10) la plus avant, un diamètre extérieur (D$_z$) qui correspond au diamètre du trou percé dans la maçonnerie, et que le col (1a) a un diamètre qui est supérieur de 40 % au diamètre de ce trou.

17. Cheville en matière plastique selon l'une des revendications 1 à 11, caractérisée par le fait que les segments écartables (3) ont chacun une surface extérieure d'où les nervures transversales (10) font saillie d'une hauteur sensiblement constante.

FIG.1

FIG.2

2a

9

5

S

FIG.3

9

7

12

2

3

3

6

8

3

5

7

7

8

2

FIG.4

FIG.5